(19) Europäisches Patentamt
European Patent Office
Office européen des brevets

(11) **EP 1 858 252 B1**

(12) **EUROPEAN PATENT SPECIFICATION**

(45) Date of publication and mention
of the grant of the patent:
**19.09.2018 Bulletin 2018/38**

(51) Int Cl.:
***H04N 5/232*** *(2006.01)*

(21) Application number: **07251991.1**

(22) Date of filing: **15.05.2007**

(54) **Method and apparatus for image capturing capable of effectively reproducing quality image and electronic apparatus using the same**

Verfahren und Vorrichtung zur Bildaufnahme mit der Fähigkeit zur effektiven Wiedergabe von Qualitätsbildern sowie diese verwendende elektronische Vorrichtung

Procédé et appareil de capture d'images capable de reproduire efficacement une image de qualité et appareil électronique l'utilisant

(84) Designated Contracting States:
**DE FR GB**

(30) Priority: **15.05.2006 JP 2006135699**

(43) Date of publication of application:
**21.11.2007 Bulletin 2007/47**

(73) Proprietor: **Ricoh Company, Ltd.**
**Tokyo 143-8555 (JP)**

(72) Inventors:
• **Morita, Nobuhiro**
**Ohta-ku, Tokyo 143-8555 (JP)**
• **Yamanaka, Yuji**
**Ohta-ku, Tokyo 143-8555 (JP)**
• **Sakuma, Nobuo**
**Inagi-shi, Tokyo, 143-8555 (JP)**

(74) Representative: **J A Kemp**
**14 South Square**
**Gray's Inn**
**London WC1R 5JJ (GB)**

(56) References cited:
WO-A-2005/054927    WO-A2-2004/063989
US-A1- 2001 003 494    US-A1- 2005 237 418
US-A1- 2006 013 479    US-B2- 6 560 037

**Description**

The present patent specification relates to a method and apparatus for image capturing and an electronic apparatus using the same, and more particularly to a method and apparatus for image capturing of effectively reproducing a higher quality image and an electronic apparatus using the same.

Image capturing apparatuses include digital cameras, monitoring cameras, vehicle-mounted cameras, etc. Some image capturing apparatuses are used in image reading apparatuses or image recognition apparatuses for performing iris or face authentication. Further, some image capturing apparatuses are also used in electronic apparatuses such as computers or cellular phones.

Some image capturing apparatuses are provided with an imaging optical system and an image pickup device. The imaging optical system includes an imaging lens that focuses light from an object to form an image. The image pickup device such as a CCD (charge coupled device) or CMOS (complementary metal-oxide semiconductor) sensor picks up the image formed by the imaging lens.

For such image capturing apparatuses, how to effectively reproduce a high quality image is a challenging task. Generally, image capturing apparatuses attempt to increase the image quality of a reproduced image by enhancing the optical performance of the imaging optical system.

However, such a high optical performance is not so easily achieved in the imaging optical system having a simple configuration. For example, the imaging optical system using a single lens may not obtain a relatively high optical performance even if the surface of the single lens is aspherically shaped.

Some image capturing apparatuses also attempt to increase the image quality of a reproduced image by using OTF (optical transfer function) data of imaging optical system.

An image capturing apparatus using the OTF data includes an aspheric element in the imaging optical system. The aspheric element imposes a phase modulation on light passing through an imaging lens. Thereby, the aspheric element modulates the OTF so as to suppress the change of OTF depending on the angle of view or the object distance of the imaging lens.

Then the image capturing apparatus picks up a phase-modulated image by an image pickup device and executes digital filtering on the picked image. Further, the image capturing apparatus restores the original OTF to reproduce an object image. Thus, the reproduced object image may be obtained while suppressing a degradation caused by differences in the angle of view or the object distance.

However, the aspheric element has a special surface shape and thus may unfavorably increase a manufacturing cost. Further, the image capturing apparatus may need a relatively long optical path so as to dispose the aspheric element on the optical path of the imaging lens system. Therefore, such an image capturing apparatus using the aspheric element is not so advantageous in cost-reduction, miniaturization, or thin modeling.

Further, an image capturing apparatus employs a compound-eye optical system, such as a microlens array, to obtain a thinner shape of image capturing apparatus. The compound-eye optical system includes a plurality of imaging lenses. The respective imaging lenses focus single-eye images to form a compound-eye image.

The image capturing apparatus picks up the compound-eye image by an image pickup device. Then the image capturing apparatus reconstructs a single object image from the single-eye images constituting the compound-eye image.

For example, an image capturing apparatus employs a microlens array including a plurality of imaging lenses. The respective imaging lenses form single-eye images. The image capturing apparatus reconstructs a single object image by utilizing parallaxes between the single-eye images.

Thus, using the microlens array, the image capturing apparatus attempts to reduce the back-focus distance to achieve a thin shape of the imaging optical system. Further, using the plurality of single-eye images, the image capturing apparatus attempts to correct degradation in resolution due to a relatively small amount of pixels per single-eye image.

However, such an image capturing apparatus may not effectively correct an optical image degradation due to the imaging optical system.

US 2006/0013479 discloses a method for improving image quality of a digital image in which the degradation of each colour component assessed and restored.

US2001/003494 and US2005/237418 (Fig.18) disclose image sensor modules with a lens unit comprising a single lens.

According to the invention there is provided an image capturing apparatus comprising:

an imaging lens to focus light from an object to form an image;
an image pickup device to pick up the image formed by the imaging lens; and
a correcting circuit to execute computations for correcting image degradation of the image caused by the imaging lens, characterised in that the imaging lens is a single lens having a surface of positive power facing the image and any one of a surface of zero power and a surface of positive power facing the object, therefore having a finite gain of optical transfer function and exhibiting a minute difference in the gain between different angles of view of the imaging lens, and

wherein the correcting circuit executes computation for correcting image degradation caused by the minute difference in the gain between different angles of view of the imaging lens based on optical transfer function data or point-spread function data obtained for the imaging lens in advance of the formation of the image of which the image degradation is to be corrected.

Additional features and advantages of the present invention will be more fully apparent from the following detailed description of example embodiments, the accompanying drawings and the associated claims.

According to a further aspect of the invention there is provided a method as defined by claim 9, a computer program comprising program code means as defined by claim 10 and a computer readable storage medium as defined by claim 11.

A more complete appreciation of the disclosure and many of the attendant advantages thereof will be readily obtained as the same becomes better understood by reference to the following detailed description when considered in connection with the accompanying drawings, wherein:

FIG. 1 is a schematic view illustrating a configuration of an image capturing apparatus according to an example embodiment of the present invention;

FIG. 2A is a schematic view illustrating optical paths of an imaging lens observed when the convex surface of the imaging lens faces an image surface;

FIG. 2B is a schematic view illustrating optical paths of the imaging lens of FIG. 2A observed when the convex surface thereof faces an object surface;

FIG. 2C is a graph illustrating MTF (modulation transfer function) values of the light fluxes of FIG. 2A;

FIG. 2D is a graph illustrating MTF values of the light fluxes of FIG. 2B;

FIG. 3A is a schematic view illustrating a configuration of an image capturing apparatus;

FIG. 3B is a partially enlarged view of a lens array system and an image pickup device illustrated in FIG. 3A;

FIG. 3C is a schematic view illustrating an example of a compound-eye image that is picked up by the image pickup device;

FIG. 4 is a three-dimensional graph illustrating an example of the change of the least square sum of brightness deviations depending on two parallax-relating parameters;

FIG. 5 is a schematic view illustrating a reconstructing method of a single object image from a compound-eye image;

FIG. 6 is a flow chart illustrating a sequential flow of an image-degradation correcting process and a reconstructing process of a single object image;

FIG. 7 is a flow chart of another sequential flow of an correcting process of image degradation and a reconstructing process of a single object image;

FIG. 8 is a graph illustrating an example of the change of MTF depending on the object distance of the imaging lens; and

FIG. 9 is a schematic view illustrating an example of a pixel array of a color CCD camera.

The accompanying drawings are intended to depict an embodiment and examples of the present invention and should not be interpreted to limit the scope thereof. The accompanying drawings are not to be considered as drawn to scale unless explicitly noted.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing an embodiment and examples illustrated in the drawings, specific terminology is employed for the sake of clarity. However, the disclosure of this patent specification is not intended to be limited to the specific terminology so selected and it is to be understood that each specific element includes all technical equivalents that operate in a similar manner.

Referring now to the drawings, wherein like reference numerals designate identical or corresponding parts throughout the several views, example embodiments of the present patent invention are described.

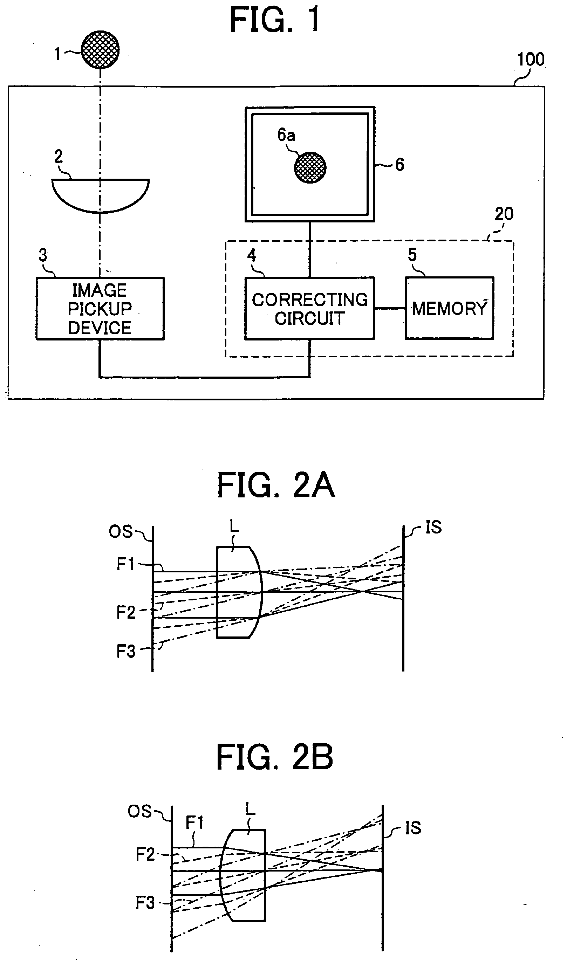

FIG. 1 is a schematic view illustrating a configuration of an image capturing apparatus 100 according to an embodiment of the present invention.

As illustrated in FIG. 1, the image capturing apparatus 100 may include an imaging lens 2, an image pickup device 3, a correcting circuit 4, a memory 5, and an image display 6, for example.

In FIG. 1, the imaging lens 2 may be a plane-convex lens having a spherically-shaped convex surface. The image pickup device 3 may be a CCD or CMOS camera. The image display 6 may be a liquid-crystal display, for example.

The correcting circuit 4 and the memory 5 may configure a correcting circuit unit 20. The correcting circuit unit 20 also constitutes a part of a control section for controlling the image capturing apparatus 100 as a whole.

As illustrated in FIG. 1, the imaging lens 2 is positioned so that a plane surface thereof faces an object 1 while a convex surface thereof faces the image pickup device 3.

The imaging lens 2 focuses light rays from the object 1 to form an image of the object 1 on an image pickup surface of the image pickup device 3. The image pickup device 3 picks up the image of the object 1, and transmits the picked image data to the correcting circuit 4.

The memory 5 stores OTF data, OTF(x,y), of the imaging lens 2. The OTF data is obtained as follows. First, the wave aberration of the imaging lens 2 is calculated by ray trace simulation. Then, the pupil function of the imaging lens 2 is determined from the wave aberration. Further, an actocorrelation calculation is executed on the pupil function, thus producing the OTF data.

The correcting circuit 4 reads the OTF data from the memory 5 and executes correcting computations on the picked image data using the OTF data. The correcting circuit 4 also outputs the corrected image data to the image display 6. The image display 6 displays a reproduced image 6a based on the corrected image data.

Next, an effect of the orientation of imaging lens on a focused image is described with reference to FIGs. 2A to 2D. An imaging lens L of FIG. 2A and 2B is configured as a plane-convex lens.

FIG. 2A is a schematic view illustrating optical paths of the imaging lens L observed when the convex surface of the imaging lens L faces a focused image. FIG. 2B is a schematic view illustrating optical paths of the imaging lens L observed when the convex surface thereof faces an object surface OS as conventionally performed.

In FIGs. 2A and 2B, three light fluxes F1, F2, and F3 may have different incident angles relative to the imaging lens L one another.

The light fluxes F1, F2, and F3 of FIG. 2A exhibit relatively lower focusing characteristics and lower ray densities compared to the light fluxes F1, F2, and F3 of FIG. 2B. Therefore, the light fluxes F1, F2, and F3 of FIG. 2A exhibit relatively small differences to one another in extent on the image surface IS.

On the other hand, the light fluxes F1, F2, and F3 of FIG. 2B exhibit relatively higher focusing characteristics compared to the light fluxes F1, F2, and F3 of FIG. 2A. Thus, the light fluxes F1, F2, and F3 of FIG. 2B exhibit relatively large differences to one another in extent on the image surface IS.

Such a relationship between the orientation of the imaging lens L and the focused image can be well understood by referring to MTF (modulation transfer function) indicative of the gain of OTF of the imaging lens L.

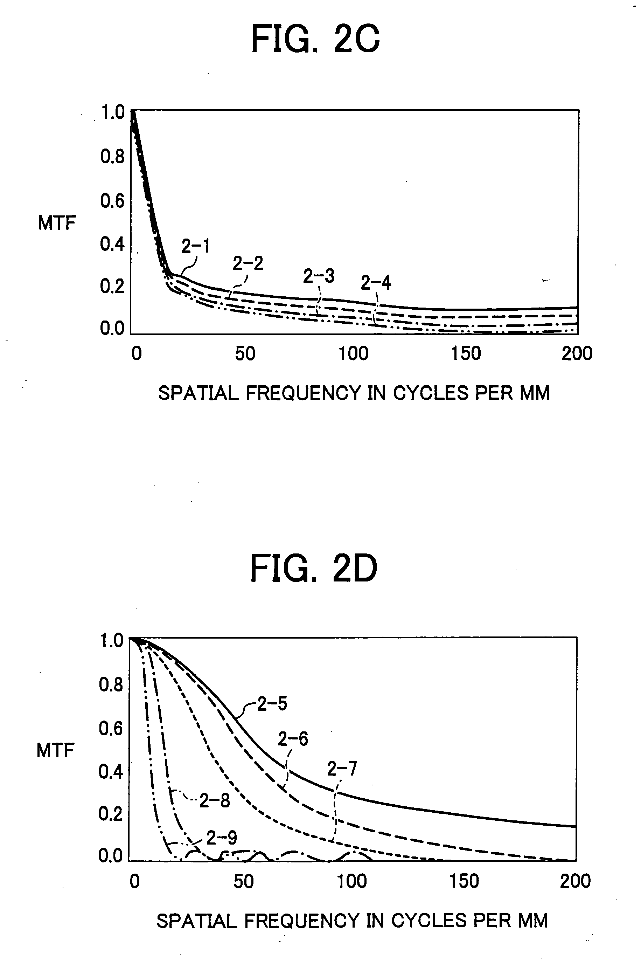

FIG. 2C is a graph illustrating MTF values of the light fluxes F1, F2, and F3 obtained when the imaging lens L is positioned as illustrated in FIG. 2A.

On the other hand, FIG. 2D is a graph illustrating MTF values of the light fluxes F1, F2, and F3 obtained when the imaging lens L is positioned as illustrated in FIG. 2B.

A comparison of FIGs. 2C and 2D provides a clear difference in MTF between the imaging states of FIGs. 2A and 2B.

In FIG. 2C, line 2-1 represents the MTF values of the imaging lens L for the light flux F1 on both sagittal and tangential planes. The observed difference in MTF between the two planes is too small to be graphically distinct.

Line 2-2 represents the MTF values of the imaging lens L for the light flux F2 on both sagittal and tangential planes. The observed difference in MTF between the two.planes is too small to be graphically distinct in FIG. 2C.

For the light flux F3, lines 2-3 and 2-4 represent MTF values of the imaging lens L on both sagittal and tangential planes, respectively. As illustrated in FIG. 2A, the light flux F3 has a relatively large incident angle relative to the imaging lens L compared to the light fluxes F1 and F2. The observed difference in MTF between the sagittal and tangential planes is graphically distinct in FIG. 2C.

Thus, in the imaging state of FIG. 2A, the imaging lens L exhibits a lower focusing performance, which results in generally finite and low MTF values. However, the imaging lens L exhibits small differences in MTF between the light fluxes F1, F2, and F3, which are caused by the differences in incident angle.

Thus, when the imaging lens L forms an object image with the convex surface thereof facing the image, the MTF values of the imaging lens L are generally finite and lower regardless of incident angles. The MTF values are also not so influenced by the difference in incident angle of light.

In the imaging state of FIG. 2B, the light flux, such as F1, having a small incident angle exhibits a negligible difference in MTF between the sagittal and tangential planes. Thus, a preferable MTF characteristic is obtained.

On the other hand, the larger the incident angle of light as indicated by F2 and F3, the smaller the MTF value.

In FIG. 2D, lines 2-6 and 2-7 represent the sagittal and tangential MTF curves, respectively, of the imaging lens L for the light flux F2. Lines 2-8 and 2-9 represent the sagittal and tangential MTF curves, respectively, of the imaging lens L for the light flux F3.

When the OTF data of a lens system are available, image degradation due to an OTF-relating factor can be corrected in the following manner.

When an object image formed on the image surface is degraded by a factor relating to the lens system, the light intensity of the object image are expressed by the following Equation 1:

$$I(x,y) = FFT^{-1}[FFT\{S(x,y)\} \times OTF(x,y)] \quad \cdots \quad 1$$

where "x" and "y" represent position coordinates in the image pick-up surface, "I(x,y)" represents light intensity of the object image picked up by the image pickup device, "S(x,y)" represents light intensity of the object, and "OTF(x,y)" represents OTF of the imaging lens. Further, FFT represents a Fourier transform operator, while $FFT^{-1}$ represents an inverse Fourier transform operator.

More specifically, the light intensity "I(x,y)" represents light intensity on the image pickup surface of an image sensor such as a CCD or CMOS image sensor.

The OTF(x,y) in Equation 1 can be obtained in advance in the following manner. First, the wave aberration of the imaging lens is determined by ray-tracing simulation. Based on the wave aberration, the pupil function of the imaging lens is calculated. Further, an autocorrelation calculation is executed on the pupil function, thereby producing the OTF data. Thus, the OTF data can be obtained in advance depending on the imaging lens used in the image capturing apparatus 100.

If the FFT is applied to both sides of Equation 1, Equation 1 is transformed into:

$$FFT\{I(x,y)\} = [FFT\{S(x,y)\} \times OTF(x,y)] \quad \cdots \quad 1a$$

Further, the above Equation 1a is transformed into:

$$FFT\{S(x,y)\} = FFT\{I(x,y)\}/OTF(x,y) \quad \cdots \quad 1b$$

In this regard, when R(x,y) represents light intensity of the reproduced image, the more exact correspondence the R(x,y) exhibits to the S(x,y), the more precisely the object is reproduced by the reproduced image.

When the OTF(x,y) is obtained for the imaging lens in advance, the R(x,y) can be determined by applying $FFT^{-1}$ to the right side of the above Equation 1b. Therefore, the R(x,y) can be expressed by the following Equation 2:

$$R(x,y) = FFT^{-1}[FFT\{I(x,y)\}/OTF(x,y)+\alpha] \quad \cdots \quad 2$$

where "$\alpha$" represents a constant that is used to prevent an arithmetic error such as division-by-zero and suppress noise amplification. In this regard, the more precise the OTF(x,y), the more closely the R(x,y) reflects the S(x,y). Thus, a precisely reproduced image can be obtained.

Thus, when OTF data is obtained in advance for an imaging lens, the image capturing apparatus 100 can provide a preferable reproduced image by executing correcting computations using Equation 2.

For the correcting computation using Equation 2, when the convex surface of the imaging lens faces the object surface OS as illustrated in FIG. 2B, a preferable reproduced image may not be obtained even if the correcting computations using Equation 2 is performed.

In such a case, the OTF of the imaging lens may significantly change depending on the incident angle of light. Therefore, even if a picked image is corrected based on only one OTF value, for example, an OTF value of the light flux F1, a sufficient correction may not be achieved for the picked image as a whole. Consequently, a preferable reproduced image may not be obtained.

In order to perform a sufficient correction, different OTF values may be used in accordance with the incident angles of light. However, when the difference in OTF between the incident angles is large, a relatively large number of OTF values in accordance with the incident angles of light are preferably used for the correcting computations. Such correcting computations may need a considerably longer processing time. Therefore, the above correcting manner is not so advantageous.

Further, when the minimum unit to be corrected is a pixel of the image pickup device, the OTF data with precision below the pixel are not available. Therefore, the larger the difference in OTF between the incident angles, the larger the error in the reproduced image.

On the other hand, when the convex surface of the imaging lens L faces the image surface IS as illustrated in

5

FIG. 2A, the difference in OTF between different incident angles of light may be smaller. Further, the OTF values of the imaging lens L are substantially identical for different incident angles of light.

Thus, in the imaging state of FIG. 2A, the image capturing apparatus 100 can obtain the finite and lower OTF values of the imaging lens L, which are not so influenced by the difference in incident angle of light.

Hence, an optical image degradation can be corrected by executing the above-described correcting computations using an OTF value for any one incident angle or an average OTF value for any two incident angles. Alternatively, different OTF values corresponding to incident angles may be used.

Using an OTF value for one incident angle can reduce the processing time for the correcting computations. Further, even when different OTF values corresponding to the incident angles are used to increase the correction accuracy, the correcting computations can be executed based on a relatively smaller amount of OTF data, thereby reducing the processing time.

Thus, the image capturing apparatus 100 can reproduce an image having a higher quality by using a simple single lens such as a plane-convex lens as the imaging lens.

In the imaging state of FIG. 2A, the effect of the incident angle on the OTF is relatively smaller as illustrated in FIG. 2C. The smaller effect indicates that, even if the imaging lens is positioned with an inclination, the OTF is not significantly influenced by the inclination.

Therefore, positioning the imaging lens L as illustrated in FIG. 2A can effectively suppress undesirable effects of an inclination error of the imaging lens L, which may occur when the imaging lens L is mounted on the image capturing apparatus 100.

When the imaging lens L exhibits a higher focusing performance as illustrated in FIG. 2B, a slight shift of the image surface IS in a direction along the optical axis may enlarge the extent of the focusing point, thereby causing image degradation.

Meanwhile, when the imaging lens L exhibits a lower focusing performance as illustrated in FIG. 2A, a slight shift of the image surface IS in a direction along the optical axis may not significantly enlarge the extent of the focusing point. Therefore, undesirable effects may be suppressed that may be caused by an error in distance between the imaging lens and the image surface IS.

In the above description, the frequency filtering using FFT is explained as a method of correcting a reproduced image in the image capturing apparatus 100.

However, as the correcting method, deconvolution computation using point-spread function (PSF) may be employed. The deconvolution computation using PSF can correct an optical image degradation similar to the above frequency filtering.

The deconvolution computation using PSF may be a relatively simple computation compared to Fourier transform, and therefore can reduce the manufacturing cost of a specialized processing circuit therefor.

As described above, the image capturing apparatus 100 uses, as the imaging lens, a single lens having a finite OTF gain and a minute difference in OTF between the incident angles of light. Since the OTF values of the single lens are finite, lower, and substantially uniform regardless of incident angle of light, the correcting computation of optical image degradation can be facilitated, thus reducing the processing time.

In the above description of the present example embodiment, the single lens for use in the image capturing apparatus 100 has a plane-convex shape. The convex surface thereof is spherically shaped and faces a focused image.

Alternatively, the single lens may also be a meniscus lens, of which the convex surface faces a focused image. The single lens may also be a GRIN (graded index) lens, or a diffraction lens such as a hologram lens or a Fresnel lens as long as the single lens has a zero or negative power on the object side and a positive power on the image side.

The single lens for use in the image capturing apparatus 100 may also be an aspherical lens. Specifically, the above convex surface of the plane-convex lens or the meniscus lens may be aspherically shaped.

In such a case, a low-dimension aspheric constant, such as a conical constant may be adjusted so as to reduce the dependency of OTF on the incident angle of light. The adjustment of the aspheric constant can reduce the difference in OTF between the incident angles, thereby compensating a lower level of MTF.

The above correcting method of reproduced images is applicable to a whole range of electromagnetic waves including infrared rays and ultraviolet rays. Therefore, the image capturing apparatus 100 according to the present example embodiment is applicable to infrared cameras such as monitoring cameras and vehicle-mounted cameras.

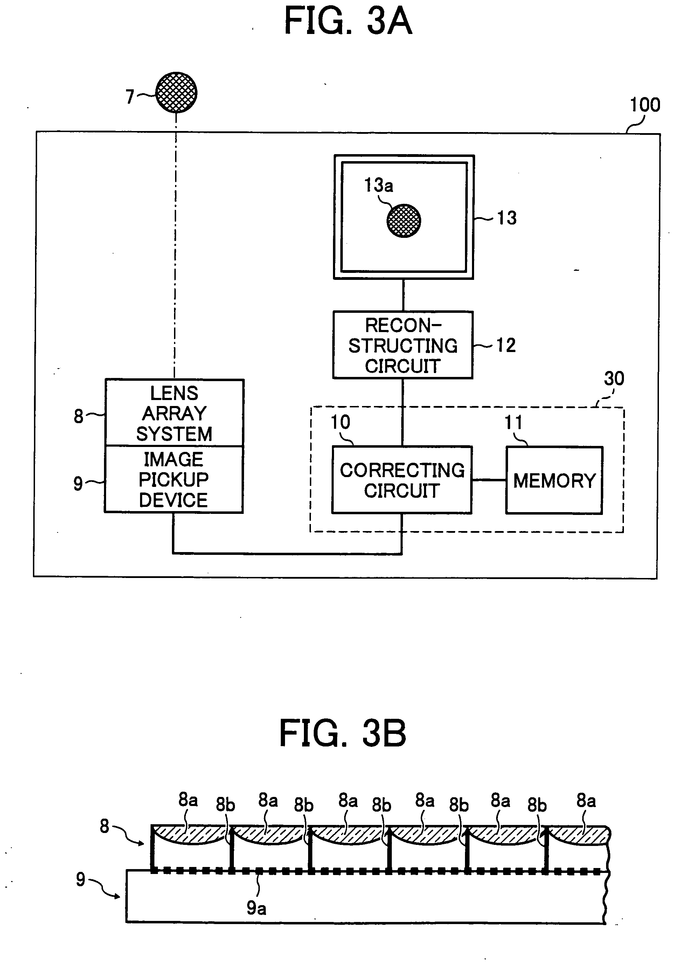

Next, an image capturing apparatus 100 according to an example of the present invention is described with reference to FIGs. 3A to 3C.

FIG. 3A illustrates a schematic view of the image capturing apparatus 100 according to an example of the present invention. The image capturing apparatus 100 may include a lens array system 8, an image pickup device 9, a correcting circuit 10, a memory 11, a reconstructing circuit 12, and an image display 13. The image capturing apparatus 100 reproduces an object 7 as a reproduced image 13a on the image display 13, for example.

The correcting circuit 10 and the memory 11 may configure a reconstructed-image correcting unit 30. The reconstructed-image correcting unit 30 and the reconstructing circuit 12 also constitute a part of a control section for controlling the image capturing apparatus 100 as a whole.

FIG. 3B is a partially enlarged view of the lens array system 8 and the image pickup device 9 illustrated in FIG. 3A.

The lens array system 8 may include a lens array 8a and a light shield array 8b. The lens array 8a may also include an array of imaging lenses. The light shield array 8b may also include an array of light shields.

Specifically, according to the present example, the lens array 8a may employ, as the imaging lenses, a plurality of plane-convex lenses that are optically equivalent to one another. The lens array 8a may also have an integral structure in which the plurality of plane-convex lenses are two-dimensionally arrayed.

The plane surface of each plane-convex lens faces the object side, while the convex surface thereof faces the image side. Each plane-convex lens is made of resin such as transparent resin. Thereby, each plane-convex lens may be molded by a glass or metal mold according to a resin molding method. The glass or metal mold may also be formed by a reflow method, an etching method using area tone mask, or a mechanical fabrication method.

Alternatively, each plane-convex lens of the lens array 8a may be made of glass instead of resin.

The light shield array 8b is provided to suppress flare or ghost images that may be caused by the mixture of light rays, which pass through adjacent imaging lenses, on the image surface.

The light shield array 8b is made of a mixed material of transparent resin with opaque material such as black carbon. Thus, similar to the lens array 8a, the light shield array 8b may be molded by a glass or metal mold according to a resin molding method. The glass or metal mold may also be formed by an etching method or a mechanical fabrication method.

Alternatively, the light shield array 8b may be made of metal such as stainless steel, which is black-lacquered, instead of resin.

According to the present example, the corresponding portion of the light shield array 8b to each imaging lens of the lens array 8a may be a tube-shaped shield. Alternatively, the corresponding portion may be a tapered shield or a pinhole-shaped shield.

Both the lens array 8a and the light shield array 8b may be made of resin. In such a case, the lens array 8a and the light shield array 8b may be integrally molded, which can increase efficiency in manufacturing.

Alternatively, the lens array 8a and the light shield array 8b may be separately molded and then assembled after the molding.

In such a case, the respective convex surfaces of the lens array 8a facing the image side can engage into the respective openings of the light shield array 8b, thus facilitating alignment between the lens array 8a and the light shield array 8b.

According to the present example, the image pickup device 9 illustrated in FIG. 3A or 3B is an image sensor, such as a CCD image sensor or a CMOS image sensor, in which photodiodes are tow-dimensionally arrayed. The image pickup device 9 is disposed so that the respective focusing points of the plane-convex lenses of the lens array 8a are substantially positioned on the image pickup surface.

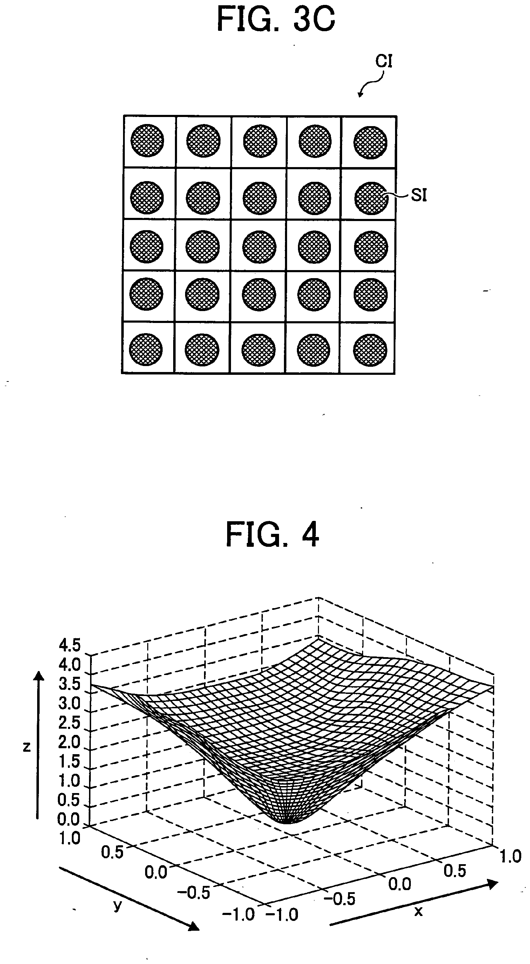

FIG. 3C is a schematic view illustrating an example of a compound-eye image CI picked up by the image pickup device 9. For simplicity, the lens array 8a is assumed to have the twenty-five imaging lenses (not illustrated). The twenty-five imaging lenses are arrayed in a square matrix form of 5x5. The matrix lines separating the single-eye images SI in FIG. 3C indicate the shade of the light shield array 8b.

As illustrated in FIG. 3C, the imaging lenses form respective single-eye images SI of the object 7 on the image surface. Thus, the compound-eye image CI is obtained as an array of the twenty five single-eye images SI.

The image pickup device 9 includes a plurality of pixels 9a to pick up the single-eye images SI as illustrated in FIG. 3B. The plurality of pixels 9a are arranged in a matrix form.

Suppose that the total number of pixels 9a of the image pickup device 9 is 500x500 and the array of imaging lenses of the lens array 8a is 5x5. Then, the number of pixels per imaging lens becomes 100x100. Further, suppose that the shade of the light shield array 8b covers 10x10 pixels per imaging lens. Then, the number of pixels 9a per single-eye image SI becomes 90x90.

Then, the image pickup device 9 picks up the compound-eye image CI as illustrated in FIG. 3C to generate compound-eye image data. The compound-eye image data are transmitted to the correcting circuit 10.

The OTF data of the imaging lenses of the lens array 8a are calculated in advance and are stored in the memory 11. Since the imaging lenses are optically equivalent to one another, only one OTF value may be sufficient for the following correcting computations.

The correcting circuit 10 reads the OTF data from the memory 11 and executes correcting computations for the compound-eye image data transmitted from the image pickup device 9. According to the present example embodiment, the correcting circuit 10 separately executes correcting computations for the respective single-eye images SI constituting the compound-eye image. At this time, the correcting computations are executed using Equation 2.

Thus, the correcting circuit 10 separately executes corrections for the respective single-eye images SI constituting the compound-eye image CI based on the OTF data of the imaging lenses. Thereby, the compound-eye image data can be obtained that are constituted of corrected data of the single-eye images SI.

Then, the reconstructing circuit 12 executes processing for reconstructing a single object image based on the compound-eye image data.

As described above, the single-eye images SI constituting the compound-eye image CI are images of the object 7 formed by the imaging lenses of the lens array 8a. The respective imaging lenses have different positional relationships relative to the object 7. Such different positional relationships generate parallaxes between the single-eye images. Thus, the single-eye images are obtained that are shifted from each other in accordance with the parallaxes.

Incidentally, the "parallax" in this specification refers to the amount of image shift between a reference single-eye image and each of the other single-eye images. The image shift amount is expressed by length.

If only one single-eye image is used as the picked image, the image capturing apparatus 100 may not reproduce the details of object 7 that are smaller than one pixel of the single-eye image.

On the other hand, if a plurality of single-eye images is used, the image capturing apparatus 100 can reproduce the details of the object 7 by utilizing the parallaxes between the plurality of single-eye images as described above. In other words, by reconstructing a single object image from a compound-eye image including parallaxes, the image capturing apparatus 100 can provide a reproduced object image having an increased resolution for the respective single-eye images SI.

Detection of the parallax between single-eye images can be executed based on the least square sum of brightness deviation between the single-eye images, which is defined by Equation 3.

$$E_m = \sum\sum\{ I_B(x,y) - I_m(x-p_x, y-p_y)\}^2 \quad \cdots \quad 3$$

where $I_B(x,y)$ represents light intensity of a reference single-eye image selected from among the single-eye images constituting the compound-eye image.

As described above, the parallaxes between the single-eye images refers to the parallax between the reference single-eye image and each of the other single-eye images. Therefore, the reference single-eye image serves as a reference of parallax for the other single-eye images.

A subscript "m" represents the numerical code of each single-eye image, and ranges from one to the number of lenses constituting the lens array 8a. In other words, the upper limit of "m" is equal to the total number of single-eye images.

When $p_x=p_y=0$ is satisfied in the term $I_m(x-p_x, y-p_y)$ of Equation 3, $I_m(x,y)$ represents light intensity of the m-th single-eye image, and $p_x$ and $p_y$ represent parameters for determining parallaxes thereof in the x and y directions, respectively.

The double sum in Equation 3 represents the sum of pixels in the x and y directions of the m-th single-eye image. The double sum is executed in the ranges from one to X for "x" and from one to Y for "y". In this regard, "X" represents the number of pixels in the "x" direction of the m-th single-eye image, and "Y" represents the number of pixels in the "y" direction thereof.

For all of the pixels composing a given single-eye image, the brightness deviation is calculated between the single-eye image and the reference single-eye image. Then, the least square sum $E_m$ of the brightness deviation is determined.

Further, each time the respective parameters $p_x$ and $p_y$ are incremented by one pixel, the least square sum $E_m$ of the brightness deviations is calculated using Equation 3. Then, values of the parameters $p_x$ and $p_y$ producing a minimum value of the least square sum $E_m$ can be regarded as the parallaxes $P_x$ and $P_y$ in the x and y directions, respectively, of the single-eye image relative to the reference single-eye image.

Suppose that, when a first single-eye image (m=1) constituting a compound-eye image is selected as the reference single-eye image, the parallaxes of the first single-eye image itself are calculated. In such a case, the first single-eye image is identical with the reference single-eye image.

Therefore, when $p_x=p_y=0$ is satisfied in Equation 3, the two single-eye images are completely overlapped. Then the least square sum $E_m$ of brightness deviation becomes zero in Equation 3.

The larger the absolute values of $p_x$ and $p_y$, the less the overlapping region between the two single-eye images, and the larger the least square sum $E_m$. Therefore, the parallaxes $P_x$ and $P_y$ between the identical single-eye images becomes zero.

Next, suppose that for the parallaxes of the mth single-eye image, $P_x=3$ and $P_y=2$ are satisfied in Equation 3. In such a case, the m-th single-eye image is shifted by three pixels in the x direction and by two pixels in the y direction relative to the reference single-eye image.

Hence, the m-th single-eye image is shifted by minus three pixels in the x direction and by minus two pixels in the y direction relative to the reference single-eye image. Thus, the m-th single-eye image can be corrected so as to precisely overlap the reference single-eye image. Then, the least square sum $E_m$ of brightness deviation takes a minimum value.

FIG. 4 is a three-dimensional graph illustrating an example of the change of the least square sum $E_m$ of brightness deviation depending on the parallax parameters $p_x$ and $p_y$. In the graph, the x axis represents $p_x$, the y axis represents $p_y$, and the z axis represents $E_m$.

As described above, the values of parameters $P_x$ and $p_y$ producing a minimum value of the least square sum $E_m$ can be regarded as the parallaxes $P_x$ and $P_y$ of the single-eye image in the x and y directions, respectively, relative to the reference single-eye image.

The parallaxes $P_x$ and $P_y$ each is defined as an integral multiple of the pixel size. However, when the parallax $P_x$ or $P_y$ is expected to be smaller than the size of one pixel of the image pickup device 9, the reconstructing circuit 12 enlarges the m-th single-eye image so that the parallax $P_x$ or $P_y$ becomes an integral multiple of the pixel size.

The reconstructing circuit 12 executes computations for interpolating a pixel between pixels to increase the number of pixels composing the single-eye image. For the interpolating computation, the reconstructing circuit 12 determines the brightness of each pixel with reference to adjacent pixels. Thus, the reconstructing circuit 12 can calculate the parallaxes $P_x$ and $P_y$ based on the least square sum $E_m$ of brightness deviation between the enlarged single-eye image and the reference single-eye image.

The parallaxes $P_x$ and $P_y$ can be roughly estimated in advance based on the following three factors: the optical magnification of each imaging lens constituting the lens array 8a, the lens pitch of the lens array 8a, and the pixel size of the pickup image device 9.

Therefore, the scale of enlargement used in the interpolation computation may be determined so that each estimated parallax has the length of an integral multiple of the pixel size.

When the lens pitch of the lens array 8a is formed with relatively higher accuracy, the parallaxes $P_x$ and $P_y$ can be calculated based on the distance between the object 7 and each imaging lens of the lens array 8a.

According to a parallax detecting method, first, the parallaxes $P_x$ and $P_y$ of a pair of single-eye images are detected. Then, the object distance between the object and each of the pair of imaging lens is calculated using the principle of triangulation. Based on the calculated object distance and the lens pitch, the parallaxes of the other single-eye images can be geometrically determined. In such a case, the computation processing for detecting parallaxes is executed only once, which can reduce the computation time.

Alternatively, the parallaxes may be detected using another known parallax detecting method, instead of the above-described parallax detecting method using the least square sum of brightness deviation.

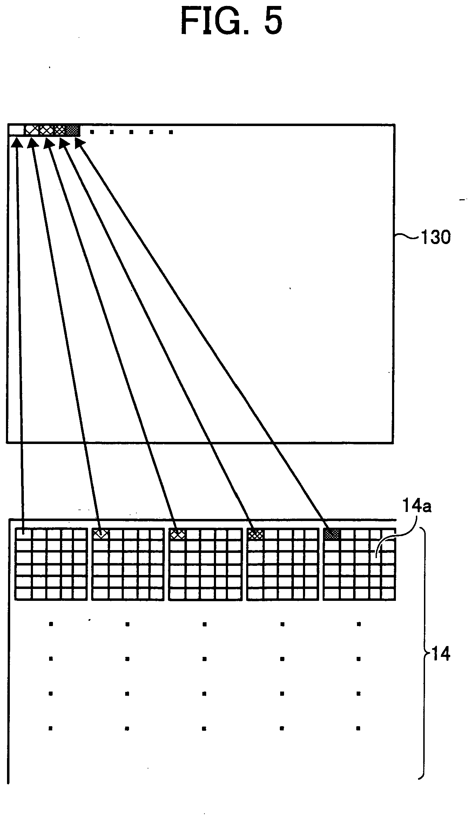

FIG. 5 is a schematic view illustrating a method of reconstructing a single object image from a compound-eye image.

According to the reconstructing method as illustrated in FIG. 5, first, pixel brightness data is obtained from a single-eye image 14a constituting a compound-eye image 14. Based on the position of the single eye-image 14a and the detected parallaxes, the obtained pixel brightness data is located at a given position of a reproduced image 130 in a virtual space.

The above locating process of pixel brightness data is repeated for all pixels of each single-eye image 14a, thus generating the reproduced image 130.

Here, suppose that the leftmost single-eye image 14a in the uppermost line of the compound-eye image 14 in FIG. 5 is selected as the reference single-eye image. Then the parallaxes $P_x$ of the single-eye images arranged on the right side thereof become, in turn, -1, -2, -3, etc.

The pixel brightness data of the leftmost and uppermost pixel of each single-eye image is in turn located on the reproduced image 130. At this time, the pixel brightness data is in turn shifted by the parallax value in the right direction of FIG. 5, which is the plus direction of the parallax.

When one single-eye image 14a has parallaxes $P_x$ and $P_y$ relative to the reference single-eye image, the single-eye image 14a is shifted by the minus value of each parallax in the x and y directions as described above. Thereby, the single-eye image is most closely overlapped with the -reference single-eye image. The overlapped pixels between the two images indicate substantially identical portions of the object 7.

However, the shifted single-eye image and the reference single-eye image are formed by the imaging lenses having different positions in the lens array 8a. Therefore, the overlapped pixels between the two images does not indicate completely identical portions, but substantially identical portions.

Hence, the image capturing apparatus 100 uses the object image data picked up in the pixels of the reference single-eye image together with the object image data picked up in the pixels of the shifted single-eye image. Thereby, the image capturing apparatus 100 can reproduce details of the object 7 that are smaller than one pixel of the single-eye image.

Thus, the image capturing apparatus 100 reconstructs a single object image from a compound-eye image including parallaxes. Thereby, the image capturing apparatus 100 can provide a reproduced image of the object 7 having an increased resolution for the single-eye images.

A relatively larger amount of parallax or the shade of the light shield array 8b may generate a pixel that has lost the brightness data. In such a case, the reconstructing circuit 12 interpolates the lost brightness data of the pixel by referring to the brightness data of adjacent pixels.

As described above, when the parallax is smaller than one pixel, the reconstructed image is enlarged so that the amount of parallax becomes equal to an integral multiple of the pixel size. At the time, the number of pixels constituting the reconstructed image are increased through the interpolating computation. Then, the pixel brightness data is located at a given position of the enlarged reconstructed image.

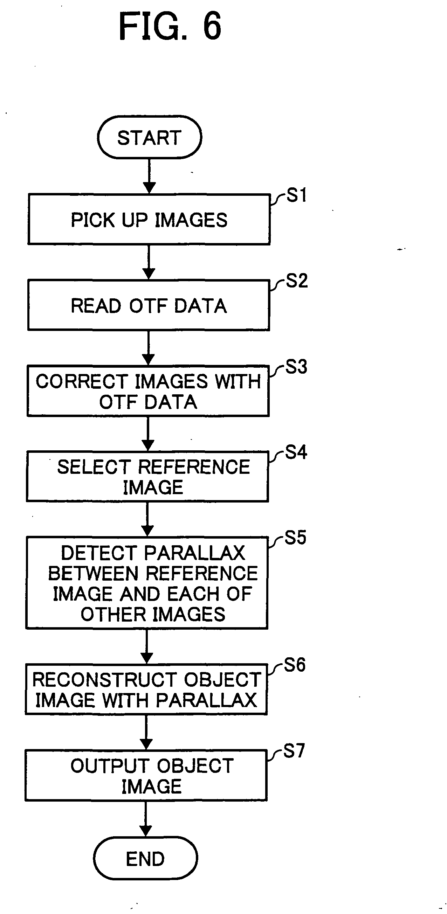

FIG. 6 is a flow chart illustrating a sequential flow of a correcting process of image degradation and a reconstructing process of a single object image as described above.

At step S1, the image pickup device 9 picks up a compound-eye image.

At step S2, the correcting circuit 10 reads the OTF data of a lens system. As described above, the OTF data is calculated in advance by ray-tracing simulation and are stored in the memory 11.

At step S3, the correcting circuit 10 executes computations for correcting image degradation in each single-eye image based on the OTF data. Thereby, a compound-eye image constituting of the corrected single-eye images is obtained.

At step S4, the reconstructing circuit 12 selects a reference single-eye image for use in determining the parallaxes of each single-eye image.

At step S5, the reconstructing circuit 12 determines the parallaxes between the reference single-eye image and each of the other single-eye images.

At step S6, the reconstructing circuit 12 executes computations for reconstructing a single object image from the compound-eye image using the parallaxes.

At step S7, the single object image is output.

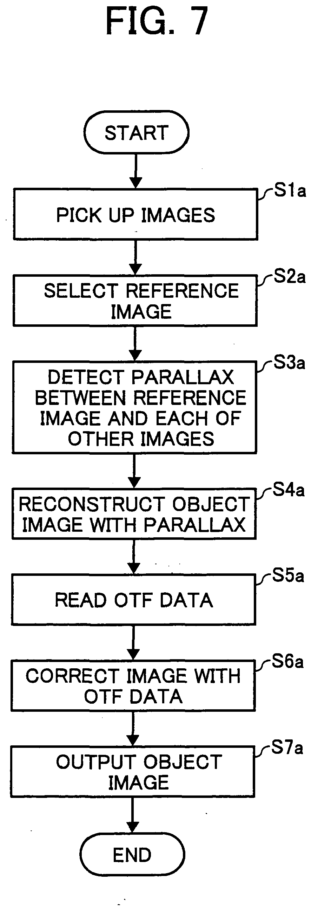

FIG. 7 is a flow chart of another sequential flow of the image-degradation correcting process and the reconstructing process of FIG. 6. In FIG. 7, the steps of the sequential flow of FIG. 6 are partially arranged in a different sequence.

At step S1a, the image pickup device 9 picks up a compound-eye image.

At step S2a, the reconstructing circuit 12 selects a reference single-eye image for use in determining the parallax of each single-eye image.

At step S3a, the reconstructing circuit 12 determines the parallax between the reference single-eye image and each single-eye image.

At step S4a, the reconstructing circuit 12 executes computations to reconstruct a single object image from the compound-eye image using the parallaxes.

At step S5a, the correcting circuit 10 reads the OTF data of the lens system from the memory 11.

At step S6a, the correcting circuit 10 executes computations to correct image degradation in the single object image based on the OTF data.

At step S7a, the single object image is output.

In the sequential flow of FIG. 7, the computation processing for correcting image degradation based on the OTF data is executed only once. Therefore, the computation time can be reduced compared to the sequential flow of FIG. 6.

However, since the OTF data are inherently related to the respective single-eye images, applying the OTF data to the reconstructed single object image may increase an error in the correction compared to the sequential flow of FIG. 6.

Next, for the imaging lenses constituting the lens array 8a of the present embodiment, a preferable constitution is examined to obtain a lower difference in MTF between angles of view.

According to the present example, each imaging lens may be a plane-convex lens, of which the convex surface is disposed to face the image side. Each imaging lens may be made of acrylic resin.

For parameters of each imaging lens, "b" represents the back focus, "r" represents the radius of curvature, "t" represents the lens thickness, and "D" represents the lens diameter.

To find a range in which finite and uniform OTF gains can be obtained within the expected angle of view relative to an object, the three parameters "b", "t", and "D" are ramdomly changed in a graph of MTF. Then, each imaging lens exhibits a relatively lower difference in MTF between the angles of view when the above parameters satisfies the following conditions:

$$1.7 \leq |b/r| \leq 2.4;$$

$$0.0 \leq |t/r| \leq 1.7;$$

and

$$1.0 \leq |D/r| \leq 3.8.$$

When the parameters are deviated from the above ranges, the MTF may drop to zero or reduce uniformity. On the other hand, when the parameters satisfies the above ranges, the lens diameter of the imaging lens becomes shorter and the F-number thereof becomes smaller. Thus, a relatively bright imaging lens having a deep depth-of-field can be obtained.

Here, suppose that each of the imaging lenses constituting the lens array 8a of FIG. 3 is made of acrylic resin. Further, the radius "r" of curvature of the convex surface, the lens diameter "D", and the lens thickness "t" are all set to 0.4 mm. The back focus is set to 0.8 mm.

In such constitution, the parameters b/r, t/r, and D/r are equal to 2.0, 1.0, and 1.0, respectively, which satisfy the above conditions.

FIG. 2C illustrates the MTF of the imaging lens having the above constitution. The graph of FIG. 2C indicates that the imaging lens is not so significantly affected by an error in incident angle of light relative to the imaging lens or a positioning error of the imaging lens.

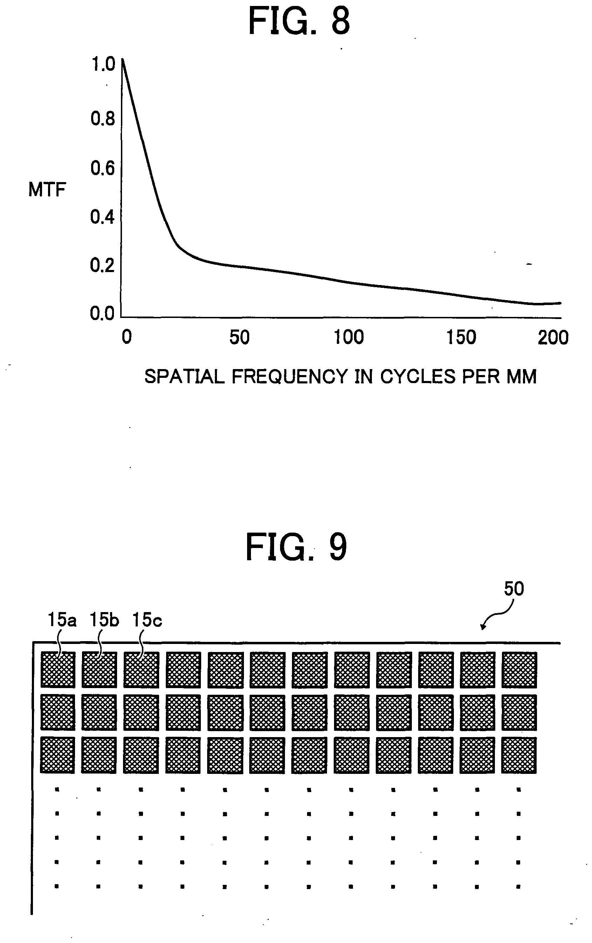

FIG. 8 illustrates an example of the change of MTF depending on the object distance of the imaging lens. When the object distance changes from 10 mm to ∞, the MTF does not substantially change and thus the change in MTF is too small to be graphically distinct in FIG. 8.

Thus, the OTF gain of the imaging lens is not so significantly affected by the change in the object distance. A possible reason thereof is because the lens diameter is relatively smaller. A smaller lens diameter reduces the light intensity, thus generally producing a relatively darker image.

However, for the above imaging lens, the F-number on the image surface IS is about 2.0, which is a sufficiently smaller value. Therefore, the imaging lens has sufficient brightness in spite of the smaller lens diameter .

The shorter the focal length of the lens system, the smaller the focused image of the object, thus decreasing the resolution of the picked image. In such a case, the image capturing apparatus 100 may employ a lens array including an arrayed plurality of imaging lenses.

Using the lens array, the image capturing apparatus 100 picks up single-eye images to form a compound-eye image. The image capturing apparatus 100 reconstructs a single object image from the single-eye images constituting the compound-eye image. Thereby, the image capturing apparatus 100 can provide the object image with sufficient resolution.

As described above, the lens thickness "t" and the back focus "b" are 0.4 mm and 0.8 mm, respectively. Therefore, the distance from the surface of the lens array 8a to the image surface IS becomes 1.2 mm. Thus, even when the thicknesses of the image pickup device, the image display, the reconstructing circuit, and the reconstructed-image correcting unit are considered, the image capturing apparatus 100 can be manufactured in a thinner dimension so as to have a thickness of a few millimeters.

Therefore, the image capturing apparatus 100 is applicable to electronic apparatuses, such as cellular phones, laptop computers, and mobile data terminals including PDAs (personal digital assistants), which are preferably provided with a thin built-in device.

As described above, a diffraction lens such as a hologram lens or a Fresnel lens may be used as the imaging lens. However, when the diffraction lens is used to capture a color image, the effect of chromatic aberration on the lens may need to be considered..

Hereinafter, a description is given to an image capturing apparatus 100 for capturing a color image according to another example embodiment of the present invention.

In another example embodiment, except for employing a color CCD camera 50 as the image pickup device 3, the image capturing apparatus 100 according to the present embodiment has substantially identical configurations to FIG. 1.

The color CCD camera 50 includes a plurality of pixels to pick up a focused image. The pixels are divided into three categories: red-color, green-color, blue-color pickup pixels. Corresponding color filters are located above the three types of pixels.

FIG. 9 is a schematic view illustrating an example of a pixel array of the color CCD camera 50.

As illustrated in FIG. 9, the color CCD camera 50 includes a red-color pickup pixel 15a for obtaining brightness data of red color, a green-color pickup pixel 15b for obtaining brightness data of green color, and a blue-color pickup pixel 15c for obtaining brightness data of blue color.

Color filters of red, green, and blue are disposed on the respective pixels 15a, 15b, and 15c, respectively, corresponding to the colors of brightness data to be acquired. On the surface of the color CCD camera 50, a set of the three pixels 15a, 15b, and 15c are sequentially disposed to obtain the brightness data of respective colors.

On an image obtained by the red-color pickup pixel 15a, correcting computations may be executed to correct image degradation in the image based on the OTF data of red wavelengths. Thus, the image corrected for red color based on the OTF data can be obtained.

Similarly, on an image obtained by the green-color pickup pixel 15b, correcting computations may be executed to correct image degradation of the image based on the OTF data of green wavelengths. Further, on an image obtained by the blue-color pickup pixel 15c, correcting computations may be executed to correct image degradation of the image based on the OTF data of blue wavelengths.

For a color image picked up by the color CCD camera 50, the image capturing apparatus 100 may display the brightness data of respective color images on the pixels of an image display 6. The pixels of the image display 6 may be arrayed in a similar manner to the pixels of the color CCD camera 50.

Alternatively, the image capturing apparatus 100 may synthesize brightness data of respective colors in an identical position between a plurality of images. Then, the image capturing apparatus 100 may display the synthesized data on the corresponding pixels of the image display 6.

When the color filters are arranged in a different manner from FIG. 9, the image capturing apparatus 100 may separately execute the correcting computations on the brightness data of respective color images. Then, the image capturing apparatus 100 may synthesize the corrected brightness data to output a reconstructed image. The embodiment of the present invention may be conveniently implemented using a conventional general purpose digital computer programmed according to the teachings of the present specification, as will be apparent to those skilled in the computer art. Appropriate software coding can readily be prepared by skilled programmers based on the teachings of the present disclosure, as will be apparent to those skilled in the software art. The embodiment of the present invention may also be implemented by the preparation of application specific integrated circuits or by interconnecting an appropriate network of conventional component circuits, as will be readily apparent to those skilled in the art.

Numerous additional modifications and variations are possible in light of the above teachings. It is therefore to be understood that within the scope of the appended claims, the disclosure of this patent specification may be practiced otherwise than as specifically described herein.

The present patent application claims priority upon Japanese patent application, No. JP2006-135699 filed on May 15, 2006, in the Japan Patent Office.

**Claims**

1. An image capturing apparatus (100) comprising:

   an imaging lens (22) to focus light from an object to form an image;
   an image pickup device (3) to pick up the image formed by the imaging lens; and
   a correcting circuit (4) to execute computations for correcting image degradation of the image caused by the imaging lens,
   **characterised in that** the imaging lens is a single lens having a surface of positive power facing the image and any one of a surface of zero power and a surface of positive power facing the object, therefore having a finite gain of optical transfer function and exhibiting a minute difference in the gain between different angles of view of the imaging lens, and
   wherein the correcting circuit is adapted to execute computation for correcting image degradation caused by the minute difference in the gain between different angles of view of the imaging lens based on optical transfer function data or point-spread function data obtained for the imaging lens (22) in advance of the formation of the image of which the image degradation is to be corrected.

2. The image capturing apparatus according to claim 1, wherein the imaging lens (2) includes only one lens.

3. The image capturing apparatus according to any one of claims 1 to 2,
   wherein the correcting circuit (4) is adapted to separately execute the computations for correcting image degradation for given wavelengths of the light from the object.

4. The image capturing apparatus according to any one of claims 1 to 3, wherein the imaging lens (2) is a plane-convex lens having a convex surface facing the image.

5. The image capturing apparatus according to any one of claims 1 to 3, wherein the imaging lens (2) is a meniscus lens having a convex surface facing the image.

6. The image capturing apparatus according to claim 4 or 5, wherein the convex surface of the imaging lens facing the image is formed in any one of a spherical shape and a non-spherical shape.

7. The image capturing apparatus according to any one claims of 4 to 6,
   wherein the imaging lens (2) satisfies following conditions:

$$1.7 \leq |b/r| \leq 2.4,$$

$$0.0 \leq |t/r| \leq 1.7,$$

and

$$1.0 \leq |D/r| \leq 3.8,$$

   wherein, for the imaging lens, "b" represents a back focus, "r" represents a radius of curvature of the convex surface, "t" represents a lens thickness, and "D" represents a lens diameter.

8. An electronic apparatus comprising the image capturing apparatus (100) according to any one of claims 1 to 7.

9. A method of capturing an image with the image capturing apparatus (100) according to any one of claims 1 to 3, comprising the steps of:

   focusing light from an object to form an image; and
   picking up the focused image;
   **characterised by** executing computations for correcting minute image degradation of the focused image caused by the difference in the gain between different angles of view of the imaging lens based on optical transfer function data or point-spread function data obtained for the imaging lens in advance of the formation of the image of which the image degradation is to be corrected.

10. A computer program comprising program code means that, when executed on an image capturing apparatus according to claims 1 to 3, instructs said apparatus to carry out the steps according to claim 9.

11. A compute readable storage medium having recorded thereon program code means that, when executed on an image capturing apparatus according to claims 1 to 3, instructs said apparatus to carry out the steps according to claim 9.

**Patentansprüche**

1. Bilderfassungsvorrichtung (100), umfassend:

   eine Bildgebungslinse (22) zum Fokussieren von Licht von einem Objekt, um ein Bild zu erzeugen;
   eine Bildaufnahmevorrichtung (3), um das durch die Bildgebungslinse erzeugte Bild aufzunehmen; und
   eine Korrekturschaltung (4) zum Ausführen von Berechnungen zum Korrigieren einer Bildverschlechterung des Bilds, die durch die Bildgebungslinse bewirkt wird,
   **dadurch gekennzeichnet, dass** die Bildgebungslinse eine einzelne Linse ist, die eine Oberfläche mit positiver Brechkraft, die dem Bild zugewandt ist, und eine beliebige aus einer Oberfläche ohne Brechkraft und einer Oberfläche mit positiver Brechkraft, die dem Objekt zugewandt ist, aufweist, weshalb sie eine begrenzte Verstärkung einer optischen Übertragungsfunktion aufweist und einen geringfügigen Unterschied der Verstärkung zwischen unterschiedlichen Bildwinkeln der Bildgebungslinse zeigt, und
   wobei die Korrekturschaltung angepasst ist, um eine Berechnung zum Korrigieren einer Bildverschlechterung, die durch den geringfügigen Unterschied der Verstärkung zwischen unterschiedlichen Bildwinkeln der Bildgebungslinse bewirkt wird, basierend auf optischen Übertragungsfunktionsdaten oder Punktstreufunktionsdaten auszuführen, die für die Bildgebungslinse (22) vor der Erzeugung des Bilds erhalten werden, dessen Bildverschlechterung korrigiert werden soll.

**2.** Bilderfassungsvorrichtung nach Anspruch 1, wobei die Bildgebungslinse (2) nur eine Linse beinhaltet.

**3.** Bilderfassungsvorrichtung nach einem der Ansprüche 1 bis 2, wobei die Korrekturschaltung (4) angepasst ist, um die Berechnungen zum Korrigieren einer Bildverschlechterung für gegebene Wellenlängen des Lichts von dem Objekt getrennt auszuführen.

**4.** Bilderfassungsvorrichtung nach einem der Ansprüche 1 bis 3, wobei die Bildgebungslinse (2) eine plankonvexe Linse mit einer konvexen Oberfläche ist, die dem Bild zugewandt ist.

**5.** Bilderfassungsvorrichtung nach einem der Ansprüche 1 bis 3, wobei die Bildgebungslinse (2) eine Meniskuslinse mit einer konvexen Oberfläche ist, die dem Bild zugewandt ist.

**6.** Bilderfassungsvorrichtung nach Anspruch 4 oder 5, wobei die konvexe Oberfläche der Bildgebungslinse, die dem Bild zugewandt ist, in einer beliebigen aus einer spärischen Form und einer nichtsphärischen Form gebildet ist.

**7.** Bilderfassungsvorrichtung nach einem der Ansprüche 4 bis 6, wobei die Bildgebungslinse (2) folgende Bedingungen erfüllt:

$$1,7 \leq |b/r| \leq 2,4,$$

$$0,0 \leq |t/r| \leq 1,7$$

und

$$1,0 \leq |D/r| \leq 3,8,$$

wobei für die Bildgebungslinse "b" einen hinteren Fokus darstellt, "r" einen Krümmungsradius der konvexen Oberfläche darstellt, "t" ein Linsenstärke darstellt und "D" einen Linsendurchmesser darstellt.

**8.** Elektronische Vorrichtung, umfassend die Bilderfassungsvorrichtung (100) nach einem der Ansprüche 1 bis 7.

**9.** Verfahren des Erfassens eines Bilds mit der Bilderfassungsvorrichtung (100) nach einem der Ansprüche 1 bis 3, umfassend die folgenden Schritte:

Fokussieren von Licht von einem Objekt, um ein Bild zu erzeugen; und
Aufnehmen des fokussierten Bilds;
**gekennzeichnet durch** Ausführen von Berechnungen zum Korrigieren einer geringfügigen Bildverschlechterung des fokussierten Bilds, die durch den Unterschied der Verstärkung zwischen unterschiedlichen Bildwinkeln der Bildgebungslinse bewirkt wird, basierend auf optischen Übertragungsfunktionsdaten oder Punktstreufunktionsdaten, die für die Bildgebungslinse vor der Erzeugung des Bilds erhalten werden, dessen Bildverschlechterung korrigiert werden soll.

**10.** Computerprogramm, umfassend ein Programmcodemittel, das, wenn es auf einer Bilderfassungsvorrichtung nach Ansprüchen 1 bis 3 ausgeführt wird, die Vorrichtung anweist, die Schritte nach Anspruch 9 auszuführen.

**11.** Computerlesbares Speichermedium mit einem darauf aufgezeichneten Programmcodemittel, das, wenn es auf einer Bilderfassungsvorrichtung nach Ansprüchen 1 bis 3 ausgeführt wird, die Vorrichtung anweist, die Schritte nach Anspruch 9 auszuführen.

**Revendications**

**1.** Appareil de capture d'image (100) comprenant :

une lentille d'imagerie (22) pour focaliser la lumière provenant d'un objet afin de former une image ;
un dispositif de prise d'image (3) pour prendre une image formée par la lentille d'imagerie ; et
un circuit de correction (4) pour exécuter des calculs afin de corriger une dégradation d'image de l'image provoquée par la lentille d'imagerie,
**caractérisé en ce que** la lentille d'imagerie est une lentille simple ayant une surface de puissance positive face à l'image et l'une quelconque d'une surface de puissance nulle et d'une surface de puissance positive face à l'objet, et ayant donc un gain fini de fonction de transfert optique et présentant une différence infime du gain entre des angles de vue différents de la lentille d'imagerie, et
le circuit de correction étant adapté pour exécuter un calcul afin de corriger une dégradation d'image provoquée par la différence infime du gain entre des angles de vue différents de la lentille d'imagerie sur la base de données de fonction de transfert optique ou de données de fonction d'étalement ponctuel obtenues pour la lentille d'imagerie (22) avant la formation de l'image dont la dégradation d'image doit être corrigée.

2. Appareil de capture d'image selon la revendication 1, dans lequel la lentille d'imagerie (2) comprend une seule lentille.

3. Appareil de capture d'image selon l'une quelconque des revendications 1 à 2,
dans lequel le circuit de correction (4) est adapté pour exécuter séparément les calculs afin de corriger la dégradation d'image pour des longueurs d'onde données de la lumière provenant de l'objet.

4. Appareil de capture d'image selon l'une quelconque des revendications 1 à 3, dans lequel la lentille d'imagerie (2) est une lentille plane-convexe ayant une surface convexe face à l'image.

5. Appareil de capture d'image selon l'une quelconque des revendications 1 à 3, dans lequel la lentille d'imagerie (2) est un ménisque ayant une surface convexe face à l'image.

6. Appareil de capture d'image selon la revendication 4 ou 5, dans lequel la surface convexe de la lentille d'imagerie face à l'image est formée en l'une quelconque d'une forme sphérique et d'une forme non sphérique.

7. Appareil de capture d'image selon l'une quelconque des revendications 4 à 6, dans lequel la lentille d'imagerie (2) satisfait les conditions suivantes :

$$1,7 \leq |b/r| \leq 2,4,$$

$$0,0 \leq |t/r| \leq 1,7,$$

et

$$1,0 \leq |D/r| \leq 3,8,$$

où, pour la lentille d'imagerie, « b » représente un point arrière, « r » représente un rayon de courbure de la surface convexe, « t » représente une épaisseur de lentille et « D » représente un diamètre de lentille.

8. Appareil électronique comprenant l'appareil de capture d'image (100) selon l'une quelconque des revendications 1 à 7.

9. Procédé de capture d'image avec l'appareil de capture d'image (100) selon l'une quelconque des revendications 1 à 3, comprenant les étapes consistant à :

focaliser la lumière provenant d'un objet pour former une image ; et
prendre l'image focalisée ;
**caractérisé par** l'exécution de calculs afin de corriger une dégradation d'image infime de l'image focalisée provoquée par la différence du gain entre des angles de vue différents de la lentille sur la base de données de fonction de transfert optique ou de données de fonction d'étalement ponctuel obtenues pour la lentille d'imagerie avant la formation de l'image dont la dégradation d'image doit être corrigée.

10. Programme informatique comprenant un moyen de code de programme qui, lorsqu'il est exécuté sur un appareil de capture d'image selon les revendications 1 à 3, ordonne audit appareil de réaliser les étapes selon la revendication 9.

11. Support de stockage lisible par ordinateur sur lequel est enregistré un moyen de code de programme qui, lorsqu'il est exécuté sur un appareil de capture d'image selon les revendication 1 à 3, ordonne audit appareil de réaliser les étapes selon la revendication 9.

# FIG. 1

# FIG. 2A

# FIG. 2B

# FIG. 2C

MTF

SPATIAL FREQUENCY IN CYCLES PER MM

# FIG. 2D

MTF

SPATIAL FREQUENCY IN CYCLES PER MM

# FIG. 3A

# FIG. 3B

# FIG. 3C

# FIG. 4

# FIG. 5

# FIG. 6

START

↓

PICK UP IMAGES — S1

↓

READ OTF DATA — S2

↓

CORRECT IMAGES WITH OTF DATA — S3

↓

SELECT REFERENCE IMAGE — S4

↓

DETECT PARALLAX BETWEEN REFERENCE IMAGE AND EACH OF OTHER IMAGES — S5

↓

RECONSTRUCT OBJECT IMAGE WITH PARALLAX — S6

↓

OUTPUT OBJECT IMAGE — S7

↓

END

# FIG. 7

```
         ┌─────────┐
         │  START  │
         └────┬────┘
              │
              ▼
    ┌──────────────────┐  ⌐S1a
    │  PICK UP IMAGES  │
    └────────┬─────────┘
             │
             ▼
    ┌──────────────────┐  ⌐S2a
    │ SELECT REFERENCE │
    │      IMAGE       │
    └────────┬─────────┘
             │
             ▼
    ┌──────────────────┐  ⌐S3a
    │ DETECT PARALLAX  │
    │ BETWEEN REFERENCE│
    │ IMAGE AND EACH OF│
    │   OTHER IMAGES   │
    └────────┬─────────┘
             │
             ▼
    ┌──────────────────┐  ⌐S4a
    │RECONSTRUCT OBJECT│
    │IMAGE WITH PARALLAX│
    └────────┬─────────┘
             │
             ▼
    ┌──────────────────┐  ⌐S5a
    │  READ OTF DATA   │
    └────────┬─────────┘
             │
             ▼
    ┌──────────────────┐  ⌐S6a
    │CORRECT IMAGE WITH│
    │     OTF DATA     │
    └────────┬─────────┘
             │
             ▼
    ┌──────────────────┐  ⌐S7a
    │  OUTPUT OBJECT   │
    │      IMAGE       │
    └────────┬─────────┘
             │
             ▼
         ┌─────────┐
         │   END   │
         └─────────┘
```

# FIG. 8

MTF

SPATIAL FREQUENCY IN CYCLES PER MM

# FIG. 9

15a  15b  15c

50

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060013479 A
- US 2001003494 A
- US 2005237418 A
- JP 2006135699 A